# EUROPEAN PATENT SPECIFICATION

(11) **EP 3 039 520 B1**
(45) Date of publication and mention of the grant of the patent: **03.10.2018**
(21) Application number: 14859062.3
(22) Date of filing: 01.08.2014
(51) Int. Cl.: G06F 3/048, G06F 3/02, H04N 21/4722, G06F 3/023, G06F 3/0489, G06F 3/0488, G06F 3/0346, G06F 3/01, G06F 3/0484, G06F 3/0482

(54) **DISPLAY APPARATUS AND UI PROVIDING METHOD THEREOF**
ANZEIGEVORRICHTUNG UND VERFAHREN ZUR BEREITSTELLUNG EINER BENUTZERSCHNITTSTELLE DAFÜR
APPAREIL D'AFFICHAGE ET SON PROCÉDÉ DE FOURNITURE D'UI

(30) Priority: 30.10.2013 KR 20130129835
(43) Date of publication of application: 06.07.2016
(73) Proprietor: Samsung Electronics Co., Ltd., Gyeonggi-do 16677 (KR)
(72) Inventor: KIM, Min-jin, Pyeongtaek-si Gyeonggi-do 450-760 (KR); KIM, Byuk-sun, Seoul 151-841 (KR); KIM, Sung-gook, Seoul 134-808 (KR); KIM, Yong-deok, Anyang-si Gyeonggi-do 431-798 (KR); NOH, Chang-soo, Yongin-si Gyeonggi-do 448-972 (KR)
(74) Representative: Walaski, Jan Filip
(86) International application number: PCT/KR2014/007089
(87) International publication number: WO 2015/064893

(56) References cited:
- DE-U1-202013 100 128
- US-A1- 2007 054 719
- US-A1- 2009 058 823
- US-A1- 2009 058 823
- US-A1- 2011 099 506
- US-A1- 2011 148 787
- US-A1- 2012 047 454
- US-A1- 2012 254 786
- US-A1- 2013 021 250

## Description

Apparatuses and methods consistent with what is disclosed herein relate to displaying and inputting characters, and more particularly, to a display apparatus configured to provide a character-input user interface (UI) to allow users to input characters with accent (or diacritic) marks, and a UI providing method thereof.

Recent displays not only provide functions or information to a user unilaterally, but also respond to user's request for a variety of functions or information. For example, TVs today provide not only broadcast reception function, but also user interactive function such as application implementation or web browsing. Accordingly, the recent displays provide character input user interface (UI) (e.g., virtual keyboard) to receive user's request to the displays.

Meanwhile, some languages such as French or Spanish frequently use accent (or diacritic) marks added to the characters. In order to support inputting of such accent marks, most virtual keyboards use a method of connecting several characters to one key.

For example, a letter is converted into a letter modified with intended accent mark in a toggle manner, i.e., converted in response to a predetermined number of times of inputting the letter to be added with accent mark on the keyboard within a predetermined time. That is, a small sized device generally supports the way of connecting A, B and C to one key, so that a letter is inputted when a user presses the key a predetermined number of times. However, as the number of letters connected to the key increases, the user experiences inconvenience since he has to press the corresponding key a plurality of times before he can have the intended letter he wants to input.

For example, in French inputting process, a user may convert alphabet 'e' into 'e' by pressing 'e' on a keypad two times within a predetermined time, and then convert it into ' ' by pressing 'e' one more time. Although the above-explained method is now familiar to those who use language that have accent marks, even these users feel fatigued particularly because they are not provided with information about the number of times they are required to press the key until they have the intended letter. DE 202013100128 relates to a method for inputting characters. US 2011/099506 relates to predictive text entry for input devices. US 2009/058823 relates to virtual keyboards in multi-language environment. US 2007/054719 relates to an input character processing method.

According to aspects of the invention, there is provided a method for providing a user interface according to claim 1 and a display apparatus according to claim 10.

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

The invention is proposed to solve the problems as described above, and the objective is to provide a display apparatus configured to enable a user to input a character modified with accent (diacritic) mark, which provides a variety of character input modes and requires simple user manipulation to operate, and a user interface (UI) providing method thereof.

The invention is set out in the appended set of claims. The embodiments and/or examples of the following description which are not covered by the appended claims are considered as not being part of the present invention.

In one example a method for providing a user interface (UI) is provided, which may include displaying a character input UI, receiving a user command to select a specific character on the character input UI, determining one of a recommended character input mode and an accent mark character input mode, based on the user command, and displaying a first character input UI or a second character input UI on an edge area of a character item that corresponds to the specific character according to the character input mode as determined, in which the first character input UI comprises recommended character items and the second character input UI comprises accent mark character items.

When the user command is inputted by successively inputting the specific character for more than a preset number of times within a preset time period, the determining the character input mode may determine the recommended character input mode, or when the user command is inputted by inputting the specific character for less than a preset number of times within the preset time period, the determining the character input mode determines the accent mark character input mode.

The method may additionally include, when a recommended character item is selected from the first character input UI displayed in the recommended character input mode, inputting recommended character that corresponds to the selected recommended character item next to the specific character, or when an accent mark character item is selected from the second character input UI displayed in the accent mark character input mode, replacing the specific character with accent mark character that corresponds to the selected accent mark character item and inputting the same.

The inputting may include displaying a block graphic user interface (GUI) on a specific character inputted to an input window in the accent mark character input mode and with the block GUI being displayed, replacing the specific character with the selected accent mark character and inputting the same.

The displaying the character input UI may include, when number of recommended characters or accent mark characters that correspond to the specific character in the character input UI displayed in each character input mode is less than a preset number of items that can be displayed on the character input UI, including at least one accent mark character or recommended character in the first or the second character input UI and displaying the same.

The displaying the character input UI may include, when number of recommended characters or accent mark characters that correspond to the specific character in the character input UI displayed in each character input mode is greater than a preset number of items that can be displayed on the character input UI, displaying a GUI, thus indicating a presence of additional recommended character or accent mark character in the first or the second character input UI.

The determining the character input mode may include, when the specific character does not support use of accent marks, determining the character input mode to be the recommended character input mode, irrespective of which type the user command is.

The first and second character input UIs may be displayed in a manner of partially overlapping with character items that are arranged adjacent to the specific character item, to allow a user to select the character item arranged adjacent to the specific character item.

The method may additionally include, when a character item corresponding to the specific character is additionally selected within a preset time period in the recommended character input mode or the accent mark character input mode, changing the character input mode.

The displaying the character input UI may include searching a recommended character for the specific character based on at least one character that has highest possibility of being inputted next to a character included in the specific character item, using a dictionary database and a user database storing therein a record of words used by a user, and displaying the searched character.

In one example, a display apparatus is provided, which may include a display configured to display character input user interface (UI), a user interface (UI) unit configured to receive a user command to select a specific character on the character input UI, and a controller configured to determine one of a recommended character input mode and an accent mark character input mode, based on the user command, and control so that a first character input UI or a second character input UI is displayed on an edge area of a character item that corresponds to the specific character according to the character input mode as determined, in which the first character input UI comprises recommended character items and the second character input UI comprises accent mark character items.

When the user command is inputted by successively inputting the specific character for more than a preset number of times within a preset time period, the controller may determine the recommended character input mode, or when the user command is inputted by inputting the specific character for less than a preset number of times within the preset time period, the controller may determine the accent mark character input mode.

When a recommended character item is selected from the first character input UI displayed in the recommended character input mode, the controller may input recommended character that corresponds to the selected recommended character item next to the specific character, or when an accent mark character item is selected from the second character input UI displayed in the accent mark character input mode, the controller may replace the specific character with accent mark character that corresponds to the selected accent mark character item and inputting the same.

The controller may display a block graphic user interface (GUI) on a specific character inputted to an input window in the accent mark character input mode and with the block GUI being displayed, replace the specific character with the selected accent mark character and input the same.

When number of recommended characters or accent mark characters that correspond to the specific character in the character input UI displayed in each character input mode is less than a preset number of items that can be displayed on the character input UI, the controller may include at least one accent mark character or recommended character in the first or the second character input UI and display the same.

When number of recommended characters or accent mark characters that correspond to the specific character in the character input UI displayed in each character input mode is greater than a preset number of items that can be displayed on the character input UI, the controller may display a GUI, thus indicating a presence of additional recommended character or accent mark character in the first or the second character input UI.

When the specific character does not support use of accent marks, the controller may determine the character input mode to be the recommended character input mode, irrespective of which type the user command is.

The first and second character input UIs may be displayed in a manner of partially overlapping with character items that are arranged adjacent to the specific character item, to allow a user to select the character item arranged adjacent to the specific character item.

When a character item corresponding to the specific character is additionally selected within a preset time period in the recommended character input mode or the accent mark character input mode, the controller may change the character input mode.

The display apparatus may additionally include a storage configured to store a dictionary database and a user database storing therein a record of words used by a user, in which the controller may search a recommended character for the specific character based on at least one character that has highest possibility of being inputted next to a character included in the specific character item, using the dictionary database and the user database, and display the searched character.

### Brief Description of Drawings

The above and/or other aspects of the present inventive concept will be more apparent by describing certain exemplary embodiments of the present inventive concept with reference to the accompanying drawings, in which:
FIG. 1 is a view provided to explain a display system according to an embodiment;
FIGS. 2A and 2B are block diagrams of a display apparatus, according to various embodiments;
FIGS. 3, 4A and 4B are views provided to explain a UI providing method according to an embodiment;
FIGS. 5A to 5C are views provided to explain form of character input UI, according to various embodiments;
FIG. 6A to 6C are views provided to explain a method for inputting a character with accent mark, according to an embodiment;
FIG. 7 is a view provided to explain a method for cancelling a accent mark character input mode, according to an embodiment;
FIG. 8 is a view provided to explain a method for shifting between input modes, according to an embodiment;
FIGS. 9A to 9C are views provided to explain forms of character input UIs, according to various embodiments; and
FIG. 10 is a flowchart provided to explain a character input UI providing method, according to an embodiment.

### Mode for the Invention

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

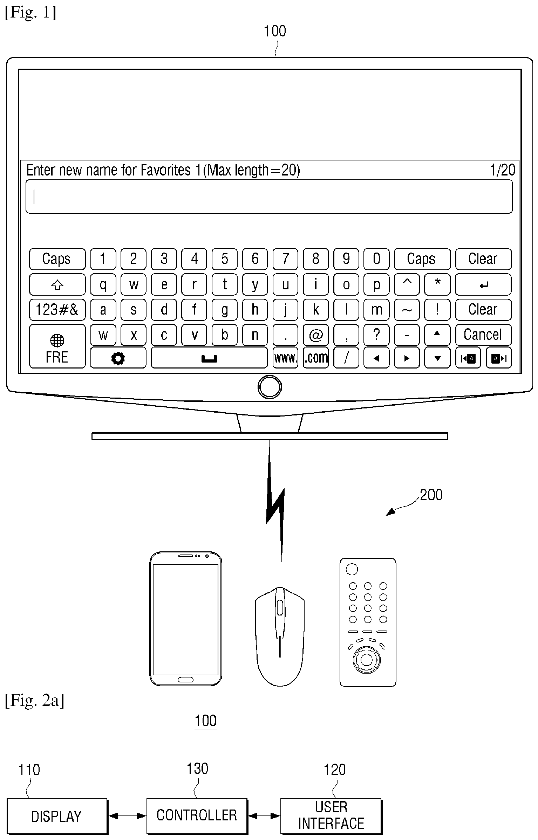

FIG. 1 is a view provided to explain a display system, according to an embodiment.

Referring to FIG. 1, the display system according to an embodiment includes a display apparatus 100 and a remote control apparatus 200.

The display apparatus 100 may be implemented as a digital TV, for example, as illustrated in FIG. 1, but not limited thereto. Accordingly, the display apparatus 100 may be implemented in a variety of devices with display function, such as, for example, PC monitor, projector mobile phone, tablet PC, PMP, PDA, or GPS. When the display apparatus 100 is implemented as a portable device, the display apparatus 100 may be imbedded with touch screen, thus allowing a user to execute a program with his finger or pen (e.g., stylus pen). The display apparatus 100 will now be explained below with reference to an example where the display apparatus 100 is implemented as a digital TV.

The display apparatus 100, when implemented as a digital TV, may be controlled by a user motion, voice or the remote control apparatus 200. The remote control apparatus 200 is provided to allow controlling of the display apparatus 100 at a remote distance, and may receive a user command, transmit a control signal corresponding to the received user command to the display apparatus 100. For example, the remote control apparatus may be formed into a variety of configurations which may detect a motion of the remote control apparatus 200 and transmit a corresponding signal, perceive a voice and transmit a corresponding signal, or transmit a signal corresponding to an incoming key. For example, the remote control apparatus 200 may be a remote controller or a mobile phone. The remote control apparatus 200 may include a motion sensor, touch sensor or an optical Joystick utilizing optical technology, a physical button (e.g., tact switch), display screen, or microphone.

The display apparatus 100 may provide a variety of user interface (UI) screens, in response to a user's request inputted through the remote control apparatus 200. Further, the display apparatus 100 may provide a variety of functions and information, in response to various types of user interactions to the UI screen.

The display apparatus 100 may provide character input UI in accordance with a variety of events, which will be explained in greater detail below with reference to the detailed block diagram of the display apparatus 100.

FIG. 2A is a schematic block diagram of a display apparatus, according to an embodiment. Referring to FIG. 2A, the display apparatus 100 includes a display 110, a user interface unit 120 and a controller 130.

The display 110 displays a UI screen. The UI screen may include an application implementation screen including a variety of contents, a web browser screen, or a graphic user interface (GUI).

In one embodiment, the display 110 may be implemented as a liquid crystal display (LCD) panel or organic light emitting diodes (OLED), but not limited thereto. In certain embodiments, the display 110 may be implemented as a flexible display or a transparent display.

The display 110 may display a character input UI, when a preset event for character input is generated. The preset event may include a user's request for search or data input. The character input UI may be a UI that includes a plurality of character items and a plurality of function items (e.g., enter, space), and may be implemented as a virtual keyboard.

The user interface unit 120 may receive a variety of user's requests. The user interface unit 120 may be implemented as a variety of forms, depending on how the display apparatus 100 is implemented. When the display apparatus 100 is implemented as a digital TV, the user interface unit 120 may be implemented as a remote control receiver which receives a remote control signal from the remote control apparatus 200, a camera which detects user motion, or a microphone which receives user's voice. Further, when the display apparatus 100 is implemented as a touch-based portable terminal, the user interface unit 120 may be implemented as a touch screen which may be in inter-layered structure with touch pad. In one embodiment, the user interface unit 110 may be used as the display 110 explained above.

When the character input UI, including a plurality of character items, is displayed, the user interface unit 120 may receive a user's request to select one from among the plurality of character items.

The controller 130 controls the overall operation of the display apparatus 100 in accordance with the user's request inputted through the user interface unit 120.

The controller 130 may determine one character input mode between mode for inputting recommended character ('recommended character input mode') and mode for inputting character with accent mark ('accent mark character input mode'), based on the user's request, and provide the corresponding character input UI in accordance with the determined character input mode.

To be specific, when a specific character is successively inputted for more than a preset number of times within a preset time period, the controller 130 determines the recommended character input mode, while when a specific character is inputted less than the preset number of times within the preset time period, the controller 130 may determine the accent mark character input mode.

Depending on embodiments, the opposite may apply. That is, the controller 130 may determine the accent mark character input mode when a specific character is inputted successively more than a preset number of times within a preset time period, while the controller 130 may determine the recommended character input mode when the specific character is inputted less than the preset number of times within the preset time period.

Depending on embodiments, the controller 130 may determine the accent mark character input mode when a specific character is pressed longer than a preset time period, while determining the recommended character input mode when the specific character is briefly pressed once.

Further, the controller 130 may determine the character input mode based on characteristics of a selected character item and event of pressing the character item.

By way of example, for a character that supports use of accent marks, the controller 130 may determine the accent mark character input mode in response to a manipulation of pressing the corresponding character item once, while for a character that does not support the accent marks, the controller 130 may determine the recommended character input mode in response to a manipulation of pressing the corresponding character item once.

As explained above, the character input mode may be determined in various manners.

Meanwhile, when the character input mode is determined, the controller 130 may control so that according to the character input mode as determined, a first character input UI including recommended character items, or a second character input UI including accent mark character items, is displayed on edge area of a character item that corresponds to a specific character. For example, for a character that supports use of accent marks, the controller 130 may provide the character input UI including accent mark character items around the corresponding character item, in response to a manipulation of pressing the corresponding character item once.

The first and second character input UIs may be displayed in a manner of partially overlapping the character items arranged around the selected character item. Alternatively, the first and second character input UIs may be displayed in certain area which is divided from the character items arranged around the selected character item.

Further, when the number of recommended characters or accent mark characters that correspond to a specific character in the character input UI displayed in each character input mode, is less than a preset number of characters that can be displayed on the character input UI, the controller 130 may control so that the first character input UI or the second character input UI may include at least one accent mark character or recommended character for displaying. For example, when the number of accent mark characters provided in the accent mark character input mode is less than a preset number of character items display able on the character input UI, the controller 130 may control so that the recommended characters may be included in a rest area other than the character input UI and displayed.

Further, the controller 130 may mix the character items provided in respective character input modes together to provide the mixture of the character items on one character input UI.

That is, when the number of recommended characters or accent mark characters corresponding to a specific character on the character input UI displayed in respective input modes, is less than a preset number of character items that can be displayed on the character input UI, the controller 130 may control so that the GUI may be displayed, indicating that the first or second character input UI each include accent mark character or recommended character. For example, when the number of accent mark characters provided in the accent mark character input mode is less than a preset number of character items display able on the character input UI, the controller 130 may control so that GUI is displayed, indicating that the recommended characters may be provided on the rest area other than the character input UI.

Further, when the number of recommended characters or accent mark characters corresponding to a specific character in the respective character input mode, is greater than a preset number of character items displayable on the character input UI, the controller 130 may control so that GUI may be displayed, indicating that the first or second character input UI may additionally include the recommended character or the accent mark characters.

For a character that does not support use of accent mark, the controller 130 may determine the character input mode to be the recommended character input mode, irrespective of a preset event.

Further, when a character item corresponding to a specific character is additionally selected within a preset time period in the recommended character input mode or the accent mark character input mode, the controller 130 may change the character input mode. For example, when a specific character item is selected once again within a preset time period in the accent mark character input mode, the controller 130 may control so that the mode is changed to the recommended character input mode (or to general character mode) and character input UI that includes recommended character items is displayed. While the 'preset time period' may apply as in the embodiments explained above, the character input mode may be changed in response to an additional input, irrespective of time factor.

When the recommended character item is selected from the first character input UI displayed in the recommended character input mode, the controller 130 may input a corresponding recommended character to the selected recommended character item, next to the specific character, and when the accent mark character item is selected from the second character input UI displayed in the accent mark character input mode, the controller 130 may replace the specific character with the accent mark character that corresponds to the selected accent mark character item and input the same.

In one embodiment, the controller 130 may display a cursor GUI next to the specific character inputted in the recommended character input mode, and input a recommended character that corresponds to the selected recommended character item, next to the specific character.

Further, the controller 130 may replace a specific character (or basic character) with a selected accent mark character and input the same, in a state that a block GUI is displayed for a specific character that is inputted in the accent mark character input mode. That is, the controller 130 may display a block GUI for a specific character inputted to an input window (not illustrated), to thus indicate that it is the accent mark character input mode.

Further, the controller 130 may finish inputting a corresponding basic character, by once again pressing the corresponding basic character item in a state that the basic character item selected in the accent mark character input mode is highlighted. In one embodiment, the basic character may be continuously displayed on the input window (not illustrated), until an input is made to the character item included in the character input UI, e.g., to one of the basic character and accent mark character item.

Alternatively, the controller 130 may finish inputting regarding a character that corresponds to a selected basic character item, when no additional input is made within a preset time period since the basic character item is selected. In one embodiment, the controller 130 may automatically change to the recommended character input mode and provide the character input UI, including recommended character items, on the edge area of the basic character item.

Alternatively, the controller may consider that it is not the acceht mark character input mode and finish inputting regarding a character that corresponds to a selected basic character item, when there is no input regarding one of the basic character and the accent mark character item within a preset time period, after displaying of the character input UI, including the accent mark character items, on the edge area of the basic character item. In one embodiment, the controller 130 may automatically change to the recommended character input mode and display character input UI that includes recommended character item which may come next to the basic character item.

Further, the controller 130 may search accent mark character item and recommended character item regarding a specific character item, using a dictionary database (DB) and a user database (DB) stored in a storage (not illustrated), in respective character input modes.

That is, when the character input mode is determined to be the accent mark character input mode, the controller 130 may first provide the accent mark character item that has higher likelihood of being chosen by the user, by referencing the dictionary DB and user DB stored in the storage (not illustrated).

Further, when the character input mode is determined to be the recommended character input mode, the controller 130 may, by referencing the dictionary DB and user DB stored in the storage (not illustrated), search at least one character that has the highest possibility of being inputted next to the character included in the specific character item, and display the searched character as the recommended character. By way of example, when "e" is selected from among a plurality of character items, the controller 130 may, by referencing the dictionary DB and user DB, display character item including "a","d","t","l" which are most likely to be inputted next to "e", as the recommended character items, around the selected character item, "e".

Further, when one or more recommended character items are displayed, and when at least one is selected from the recommended character items, the controller 130 may control the display 120 to display at least one new recommended character item based on a combination of a character included in the previously-selected character item and a character included in the currently-selected recommended character item, around the currently-selected character item. For example, when "d" is selected from the recommended character items of "e", the controller 130 may reference the dictionary DB and the user DB and display character items including "u","i","o","t" that have highest possibility of being inputted next to "ed", as new recommended character items around the selected character item "d".

Meanwhile, when one is selected from the one or more recommended character items, the controller 130 may display the selected recommended character items, i.e., display the recommended character items that may be inputted next to the selected recommended character item, around the recommended character item on which a select GUI such as focus highlighting is placed. In one embodiment, the recommended character items that are displayed may be those that have the highest possibility of being inputted next to the selected recommended character item.

After the recommended character item is selected, the controller 130 may move the select GUI such as focus highlighting to a character item that is arranged at a center of the character input UI and display the same, although not limited thereto. In another embodiment, the focus highlighting may be maintained on the selected recommended character item even after the recommended character item is selected.

Further, the controller 130 may apply the above-explained operation in the accent mark character input mode.

To be specific, when one is selected from one or more accent mark character items, the controller 130 may display recommended character items that may be inputted next to the selected accent mark character item, around the selected accent mark character item. As explained above, the recommended character items that are displayed may be those that have the highest possibility of being inputted next to the selected accent mark character item.

After the accent mark character item is selected, the controller 130 may move the select GUI such as focus highlighting to a character item that is arranged at a center of the character input UI and display the same, although not limited thereto. In another embodiment, the focus highlighting may be maintained on the selected accent mark character item even after the recommended character item is selected.

Accordingly, the user of the display apparatus 100 can input intended words with convenience, while minimizing his movement to input the same.

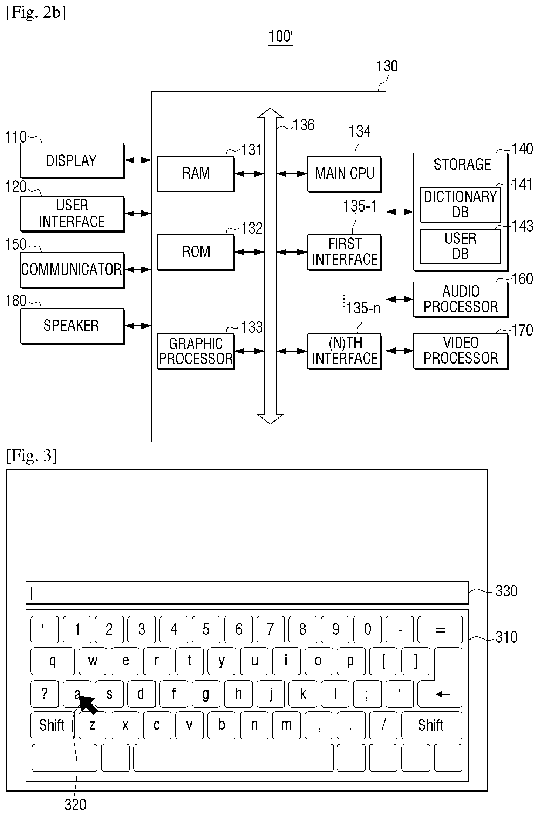

FIG. 2B is a detailed block diagram of a display apparatus, according to another embodiment. Referring to FIG. 2B, the display apparatus 100' according to another embodiment includes a display 110, a user interface unit 120, a controller 130, a storage 140, a communicator 150, an audio processor 160, a video processor 170 and a speaker 180. The like elements will not be redundantly explained below, but referenced to the explanation provided above with reference to FIG. 2A for the sake of brevity.

The image receiver (not illustrated) receives image data through a variety of sources. For example, the image receiver (not illustrated) may receive broadcast data from external broadcasting station, or receive image data from external device (e.g., DVD, BD player, etc.)

The storage 140 stores a variety of modules to drive the display apparatus 100. For example, the storage 140 may store software that may include a base module, a sensing module, a communication module, a presentation module, a web browser module or a service module. The 'base module' as used herein refers to a base module that processes signal transmitted from each hardware included in the display apparatus 100 and transmit the same to the upper layer module. The 'sensing module' as used herein refers to a module that collects information from respective sensors and analyzes and manages the collected information, and may include a facial recognition module, voice recognition module a motion recognition module, or a NFC recognition module. The 'presentation module' as used herein refers to a module provided to construct a display screen, which may include a multimedia module to playback and output multimedia content, or a UI rendering module to perform UI and graphic processing. The 'communication module' as used herein refers to a module to perform communication with external devices. The 'web browser module' as used herein refers to a module which accesses web server by web browsing. The 'service module' as used herein refers to a module that includes applications to provide a variety of services.

The storage 140 stores a dictionary DB 141 and a user DB 143 to provide accent mark character or recommended character to the user. That is, the dictionary DB 141 records therein words with general definitions and accent mark character which are supportable in the respective characters. The user DB 143 records therein information about words used by the user, or accent mark characters used by the user within a preset period of time. Further, the dictionary DB 141 may store accent mark character information about characters that support use of accent mark characters.

In one embodiment, the dictionary DB 141 and the user DB 143 may be stored in the storage 140, but not limited thereto. Accordingly, the dictionary DB and the user DB may be stored in an external device (e.g., external server) connected via network.

The communicator 150 is configured to communicate with a variety of types of external devices or external server, according to a variety of types of communication methods. The communicator 150 may include WiFi chip, Bluetooth chip, NFC chip, wireless communication chip, or various others. The WiFi chip, the Bluetooth chip and the NFC chip may communication in WiFi communication, Bluetooth communication and NFC manners. The near field communication (NFC) chip utilizes 13.56MHz among various RF-ID frequency bands including 135kHz, 13.56MHz, 433MHz, 860∼960MHz, 2.45GHz. The wireless communication chip communicates under a variety of communication specifications including, for example, IEEE, ZigBee, 3rd Generation (3G), 3rd Generation Partnership Project (3GPP), or Long Term Evolution (LTE).

The audio processor 160 is provided to process audio data. The audio processor 160 may perform processing such as, for example, audio data decoding, amplification, noise filtering, or many others.

The video processor 170 is provided to process image data received at the image receiver (not illustrated). The video processor 170 may perform image processing such as, for example, image data decoding, scaling, noise filtering, frame rate conversion, resolution conversion, or many others.

The speaker 180 is provided to output not only audio data that is processed at the audio processor 160, but also alarm sounds or voice messages.

The controller 130 controls the overall operation of the display apparatus 100', using programs stored in the storage 140.

Referring to FIG. 2B, the controller 130 may include a RAM 131, a ROM 132, a graphic processor 133, a main CPU 134, first to (n)th interfaces 135-1 ∼ 135-n, and a bus 136. The RAM 131, the ROM 132, the graphic processor 133, the main CPU 134 and the first to (n)th interfaces 135-1 ∼ 135-n may be connected to each other via the bus 136.

The ROM 132 stores a set of commands for system booting purpose. As the power is supplied in response to turn-on command, the main CPU 134 copies O/S stored in the storage 140 onto RAM 131 in accordance with the command stored in the ROM 132, and boots up the system by executing the O/S. When booting completes, the main CPU 134 copies the application programs stored in the storage 140 onto the RAM 131, and perform corresponding operations by executing the application programs copied to the RAM 131.

The graphic processor 133 generates screen that includes objects such as icons, images, or texts, using an operator (not illustrated) and a renderer (not illustrated). The operator computes attribute values such as coordinates, geometry, size or color in which the respective objects are to be displayed, according to screen layout, by using a control command received via the user interface unit 120. The renderer generates screens of various layouts including objects, based on the attribute values computed at the operator. The screen generated at the renderer is displayed within a display area of the display 110.

The main CPU 134 accesses the storage 140 and performs booting, using the O/S stored in the storage 140. The main CPU 134 performs a variety of operations, using the programs, contents or data stored in the storage 140.

The first to (n)th interfaces 135-1 ∼ 135-n are connected to the components explained above. One of the interfaces may be the network interface which is connected to external device via network.

When the display 110 displays character input UI that includes a plurality of character items, and when a user command is inputted through the user interface unit 120, directing to select a first character item from among the plurality of character items, the controller 130 may determine character input mode based on the user command and display the character input UI that corresponds to the character input mode. The character input UI may be a virtual keyboard, and the character item may be composed of key edge of a preset shape (e.g., rectangle, circle) enclosing the key, and character (e.g., alphabet, number) enclosed in the key edge.

That is, referring to FIG. 3, with the character input UI 310, a pointer 320 and a character input window 330 being displayed, when a user command is received via the user interface unit 120, directing to select character item "a" 411, the controller 130 determines the recommended character input mode or the accent mark character input mode, based on the received user command.

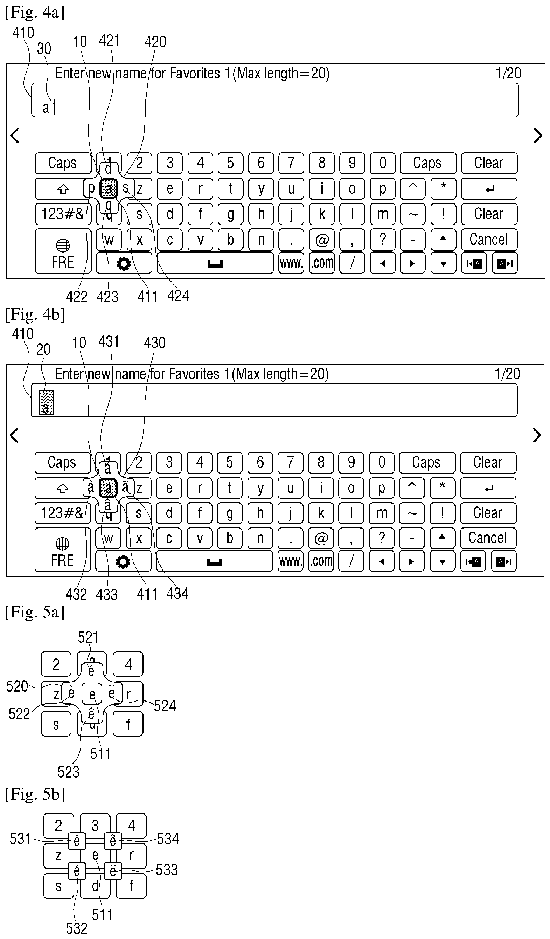

When the character input mode is determined to be the recommended character input mode, referring to FIG. 4A, a character input UI 420 including recommended character items 421, 422, 423, 424 may appear. In this case, the controller 130 may search recommended character item for character item "a", by referencing the dictionary DB 141 and the user DB 143 stored in the storage 140. To be specific, the controller 130 may search at least one recommended character item for character item "a", based on at least one character that has the highest possibility of being inputted next to character item "a". For example, using the dictionary DB 141 and the user DB 143, the controller 130 may search "d","p","s","c" as those that are included in the recommended character item for character item "a". In this case, the controller 130 may determine a position where the recommended character items are arranged, according to priority, i.e., in the order of higher possibility.

When the character input mode is determined to be the accent mark character input mode, referring to FIG. 4B, a character input UI 430 including recommended character items 431, 432, 433, 434 may be displayed. Using the dictionary DB 141, the controller 130 may search accent mark character that corresponds to inputted character item "a" 411. When there are more accent mark characters than those that can be provided on the character input UI, the accent mark characters with higher possibility may be searched and displayed. Further, the controller 130 may determine a position where the accent mark character items are arranged, according to priority, i.e., in the order of higher possibility.

Meanwhile, as illustrated in FIG. 4B, on the character item 411 which is selected in the accent mark character input mode, the select GUI 10 may be displayed, and the character "a" that corresponds to the character item 411 selected in the input window 410 may be processed with block GUI 20. By doing so, it is possible to indicate that it is the accent mark character input mode in which the inputted character "a" can be replaced with accent mark ch.

FIGS. 5A to 5C are views provided to explain forms of character input UI, according to various embodiments.

Referring to FIGS. 5A to 5C, the character input UI may be displayed in a variety of forms, and it is assumed hereinbelow that the mode is in the accent mark character input mode, for convenience of explanation.

In one embodiment, the character input UI 520, 230 may be overlapped on the character item which is arranged on an area adjacent with reference to the selected character item 511 (see FIGS. 5A, 5B).

That is, referring to FIG. 5A, the character input UI 520 may be so formed that the accent mark character items 521 ro 524 are continuously arranged on upper, lower, left and right areas of the selected character item 511. Depending on embodiments, the accent mark character items on upper, lower, left and right areas may be arranged at certain intervals.

Referring to FIG. 5B, the character input UI 530 may be so formed that the accent mark character items 531 to 534 are arranged on upper-left, upper-right, lower-left and lower-right areas of the selected character item 511 at certain intervals.

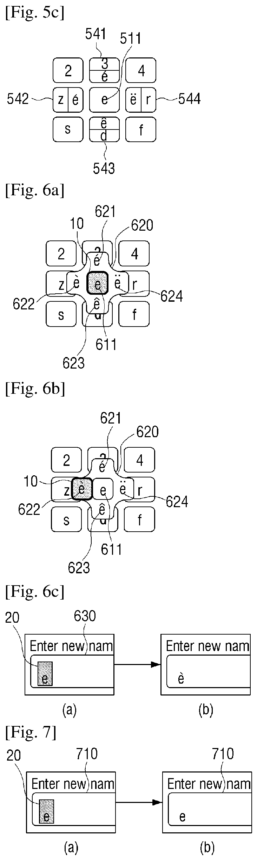

Referring to FIG. 5C which illustrates another embodiment, the character input UI 540 may share portion of the areas of the character items which are arranged around the selected character item 511.

That is, referring to FIG. 5C, the character input UI 540 may share portion of the areas of the character items 541 to 544 arranged on the upper, lower, left and right areas of the selected character item 511, and adjacent to the selected character item 511.

FIG. 6 is a view provided to explain a method for inputting accent mark character according to an embodiment.

Referring to FIG. 6A, when a specific character item 611 is selected, a character input UI 620 including accent mark character items 621 to 624 corresponding to the selected character item 611 is displayed, and the select GUI 10 is placed on the selected character item 611.

Referring to FIG. 6B, the select GUI 10 may be moved in response to a user command, and placed on one 622 of the accent mark character items 621 to 624. Meanwhile, while the specific character item 611 is selected and the select GUI 10 is moved on the character input UI 620, the character that corresponds to the specific character item 611 selected in the input window 630 may be processed with the block GUI 20 and displayed.

Next, when the accent mark character item 622 with the select GUI 10 placed thereon is selected, referring to FIG. 6C (right-hand side), the character with block GUI 20 in the input window 630 is replaced with the selected accent mark character item 622 and displayed.

FIG. 7 is a view provided to explain a method for cancelling accent mark character input mode, according to an embodiment.

Depending on embodiments, the accent mark character input mode may be cancelled, when one is selected from the accent mark characters provided on the character input UI, or when the select GUI moves away from the character input UI. For example, referring to FIG. 6C, this may apply when the accent mark character item 622 is selected.

Further, when the select GUI moves away from the character input UI area that includes accent mark character item in a state that the accent mark character is not selected, referring to FIG. 7, the block GUI 20 that used to be in the input window 730 is cancelled, and only one of the plurality of inputs to enter accent mark character input mode is considered valid, so that the corresponding character is maintained in the input window.

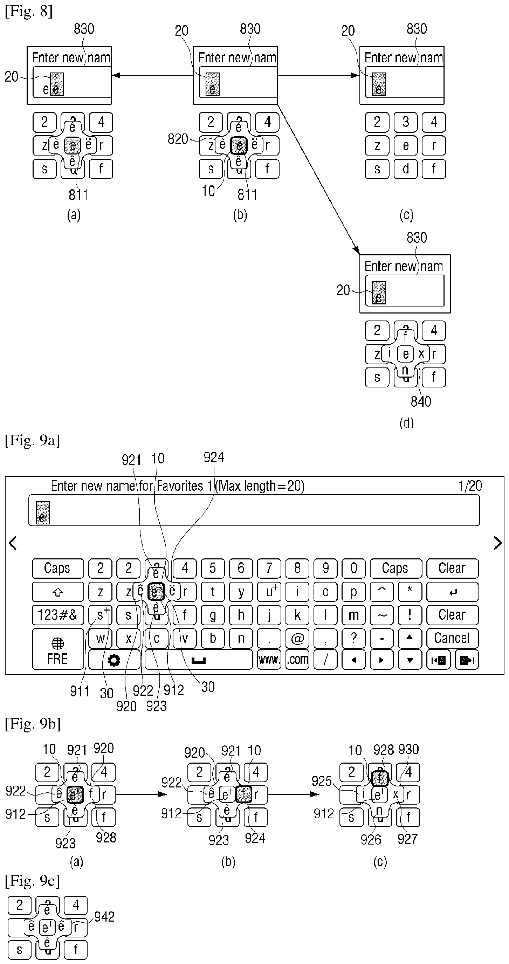

FIG. 8 is a view provided to explain a method for changing input mode, according to an embodiment.

Referring to FIG. 8 (center), it is assumed that the corresponding character input UI 820 is displayed in the accent mark character input mode, and character "e" corresponding to the selected character item 811 is processed with block GUI 20 in the input window 830 and displayed.

When the selected character item 811 is selected once again within a preset time period after the last input to enter the accent mark character input mode, the mode may change to general character input mode. In the general character input mode, the character input UI 820 as the one illustrated in FIG. 8 (upper-right) disappears. That is, input mode may change in toggle manner, depending on whether there is successive inputs within a preset time period or not. However, even in changing modes, the block GUI 20 may be maintained in the input window to indicate that the accent mark character input is not finished yet.

Depending on embodiments, referring to FIG. 8 (lower-rght), when the accent mark character input mode is cancelled, the mode may change to recommended character input mode which directly provides corresponding recommended character items.

Meanwhile, when there is no successive input within the preset time period after the last input to enter the accent mark character input mode, a character that corresponds to the selected character item 811 is confirmed and inputted, after which a newly-inputted character may be changed to accent mark character input standby mode. For example, referring to FIG. 8 (left-hand side), when a user presses the selected character item 811 once again after a preset time period in the accent mark character input mode, the accent mark character input is cancelled, and the character "e" that corresponds to the selected character item 811 is confirmed. After that, it is considered that a new corresponding character item 811 is inputted, according to which new character "e" may be processed with block GUI 20 and inputted next to the character "e" which is confirmed and inputted to the input window 30.

FIGS. 9A to 9C are views provided to explain forms of character input UI, according to a variety of embodiments.

Referring to FIG. 9A, GUI 30 may be displayed on the character items 911, 912 supporting accent mark character on the virtual keyboard, to indicate the accent mark character is supported.

Further, as illustrated, when the character input UI 920 corresponding to the accent mark character input mode is provided, a GUI 40 may be displayed, thus indicating that there are more accent mark characters, when there are more than predetermined number (e.g., 5) of accent mark characters that can be provided on the accent mark character input UI 920. Accordingly, when the corresponding GUI 40 is selected, the currently-provided accent mark character item may be replaced with the next accent mark character item and provided. In one embodiment, when there are still more accent mark characters, the corresponding GUI 40 may continuously be displayed.

Depending on embodiments, by referring to FIG. 9B, the GUI 40 to indicate presence of additional accent mark characters may be displayed along with a specific accent mark character item.

Further, referring to FIG. 9C, when the character input UI 920 corresponding to the accent mark character input mode is provided, and when the number of accent mark characters that can be provided on the character input UI 920 is less than a predetermined number (e.g., less than 4), recommended character item 924 may be provided on the rest item display area. In one embodiment, when the corresponding recommended character item 924 is selected through the select GUI 10, the character input UI 920 is changed to character input UI 930 to input recommended character and displayed.

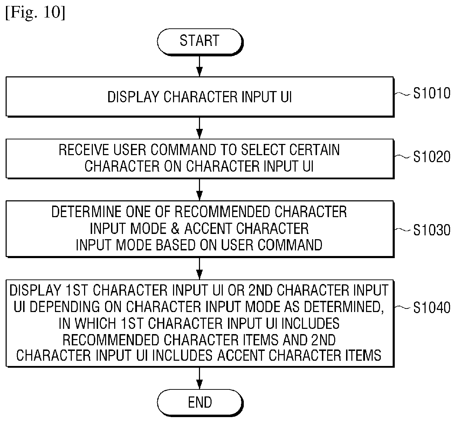

FIG. 10 is a flowchart provided to explain a method for providing a character input UI, according to an embodiment.

According to the UI providing method of FIG. 10, at S1010, the character input UI is displayed. The character input UI may be displayed, when a preset event to input character is generated.

At S1020, when a user command to select a specific character is received on the character input UI, at S1030, one of the recommended character input mode and accent mark character input mode is determined based on the received user command.

After that, at S1040, a first character input UI, including recommended character items within the enclosure of character items that correspond to a specific character, or a second character input UI, including the accent mark character items, may be displayed depending on the character input mode as determined.

Meanwhile, the operation at S1030 of determining the character input mode may determine the recommended character input mode when the user command is inputted by a predetermined number of successive inputs for a specific character within a preset time, or determine the accent mark character input mode when the user command is inputted by less than a predetermined number of inputs for a specific character within a preset time period.

Further, when the recommended character item is selected from the first character input UI displayed in the recommended character input mode, the recommended character that corresponds to the selected recommended character item is inputted next to the specific character, and when the accent mark character item is selected from the second character input UI displayed in the accent mark character input mode, the specific character may be replaced with an accent mark character that corresponds to the selected accent mark character item and inputted. In the accent mark character input mode, the block GUI may be displayed on the specific character that is inputted in the input window, thus indicating that it is the accent mark character input mode. When the accent mark character item is selected in a state that the block GUI is displayed, the inputted specific character may be replaced with the selected accent mark character and inputted. In the recommended character ni put mode, the input of a specific input character may be confirmed, by displaying cursor GUI next to the specific character inputted to the input window.

The operation at S1040 of displaying character input UI may display the first or the second character input UI, each including at least one accent mark character or recommended character, when the number of recommended characters or accent mark characters corresponding to the specific character in the character input UI displayed in each character input mode is less than a preset number of items that can be displayed on the character input UI.

Further, the operation at S1040 of displaying the character input UI may display a GUI to indicate that there are additional recommended characters or accent characters in the first or second character input UI, when the number of the recommended characters or accent mark characters corresponding to the specific character selected in each character input mode is greater than a preset number of items that can be displayed in the character input UI.

Further, the operation at S1030 of determining the character input mode may determine the character input mode to be the recommended character input mode, irrespective of a type of user command, when the specific character does not support use of accent marks.

Meanwhile, to allow a user to select character items arranged near the specific character item, the first and second character input UIs may be displayed in a manner of partially overlapping the character items arranged near the specific character item.

Further, when character item corresponding to the specific character is additionally selected within a preset time period in the recommended character input mode or accent mark character input mode, the character input mode may be changed.

Further, the operation at S1040 of displaying character input UI may search recommended character for a specific character, based on at least one character that has the highest possibility of being inputted next to the character included in the specific character item, using the dictionary DB and the user DB which records information about record of words used, and display the searched character.

In various embodiments, user is provided with a variety of character input modes and corresponding character input UI with simple manipulations. Further, the user is able to input intended accent mark characters with minimum manipulations, and thus is provided with efficient and effective accent mark character input.

Meanwhile, the method for providing UI of the display apparatus according to various embodiments may be implemented as program and provided on a display apparatus.

To be specific, a non-transitory computer readable medium maybe provided, storing therein a program that includes: when a user command to select a specific character is inputted on the character input UI, determining one of recommended character input mode and accent mark character input mode; and depending on the character input mode as determined, providing a first character input UI or a second character input UI on an edge area of an character item that corresponds to the specific character, in which the first character input UI includes recommended character items and the second character input UI includes accent mark character items.

The 'non-transitory readable medium' as used herein refers to a medium configured to semi-permanently store data and enable reading by a device, rather than a medium that stores data for a relatively brief period of time, such as register, cache, or memory. To be specific, CD, DVD, hard disc, Blu-ray disc, USB, memory card or ROM are the examples.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, not to limit the scope of the claims, and many alternatives, modifications, and variations will be apparent to those skilled in the art.

## Claims

1. A method for providing a user interface, UI, comprising:
displaying (S1010) a character input UI (310);
receiving (S1020) a user command for selecting a specific character (411, 511, 611, 811, 911) on the character input UI (310);
determining (S1030) an input mode between a recommended character input mode and an accent mark character input mode, based on the user command; and
displaying, (S1040) on an edge area of a character item that corresponds to the specific character, a first character input UI (420) or a second character input UI (430) according to the character input mode as determined,
wherein determining the input mode comprises determining the input mode based on at least one of: a number of times the specific character is successively input within a first preset time period, a time for which the specific character is input, and characteristics of the specific character, and
wherein the first character input UI (420) comprises recommended character items (421, 422, 423, 424), each of the recommended character items comprising a predicted character to be input next to the selected character, and the second character input UI (430) comprises accent mark character items (431, 432, 433, 434), each of the accent mark character items comprising a possible accent mark character to replace the selected character,
wherein the method further comprises:
when a character item corresponding to the specific character (811) is selected within a second preset time period after displaying the first character input UI (420), changing the recommended character input mode to the accent mark character input mode and displaying the second character input UI (430), and
when a character item corresponding to the specific character (811) is selected within the second preset time period after displaying the second character input UI (430), changing the accent mark character input mode to the recommended character input mode and displaying the first character input UI (420).

2. The method of claim 1, wherein, when the user command is inputted by successively inputting the specific character for more than a preset number of times within the first preset time period, displaying the specific character in an input window and determining the recommended character input mode, or
when the user command is inputted by inputting the specific character for less than or equal to a preset number of times within the first preset time period, displaying the specific character in an input window and determining the accent mark character input mode.

3. The method of claim 1, further comprising, when a recommended character item is selected from the first character input UI displayed in the recommended character input mode, inputting recommended character that corresponds to the selected recommended character item next to the specific character, or when an accent mark character item is selected from the second character input UI displayed in the accent mark character input mode, replacing the specific character with accent mark character that corresponds to the selected accent mark character item and inputting the same.

4. The method of claim 3, wherein the inputting comprises displaying a graphic user interface, GUI on a specific character inputted to an input window in the accent mark character input mode and with the GUI being displayed, replacing the specific character with the selected accent mark character and inputting the same.

5. The method of claim 1, wherein the displaying the character input UI comprises, when number of recommended characters or accent mark characters that correspond to the specific character in the character input UI displayed in each character input mode is less than a preset number of items that can be displayed on the character input UI, including at least one accent mark character or recommended character in the first or the second character input UI and displaying the same.

6. The method of claim 1, wherein the displaying the character input UI comprises, when number of recommended characters or accent mark characters that correspond to the specific character in the character input UI displayed in each character input mode is greater than a preset number of items that can be displayed on the character input UI, displaying a GUI, thus indicating a presence of additional recommended character or accent mark character in the first or the second character input UI.

7. The method of claim 1, wherein the determining the character input mode comprises, when the specific character does not support use of accent marks, determining the character input mode to be the recommended character input mode, irrespective of which type the user command is.

8. The method of claim 1, wherein the first and second character input UIs are displayed in a manner of partially overlapping with character items that are arranged adjacent to the specific character item, to allow a user to select the character item arranged adjacent to the specific character item.

9. The method of claim 1, wherein the displaying the character input UI comprises searching a recommended character for the specific character based on at least one character that has highest possibility of being inputted next to a character included in the specific character item, using a dictionary database and a user database storing therein a record of words used by a user, and displaying the searched character.

10. A display apparatus (100) comprising:
a display (110) configured to display a character input user interface, UI;
a user interface, UI, unit (120) configured to receive a user command for selecting a specific character on the character input UI; and
a controller (130) configured to determine an input mode between a recommended character input mode and an accent mark character input mode, based on the user command, and to control the display to display, on an edge area of a character item that corresponds to the specific character, a first character input UI or a second character input UI according to the character input mode as determined,
wherein the controller is configured to determine the input mode based on at least one of: a number of times the specific character is successively input within a first preset time period, a time for which the specific character is input, and characteristics of the specific character, and
wherein the first character input UI comprises recommended character items, each of the recommended character items comprising a predicted character to be input next to the selected character, and the second character input UI comprises accent mark character items, each of the accent mark character items comprising a possible accent mark character to replace the selected character,
wherein the controller is further configured to:
when a character item corresponding to the specific character is selected within a second preset time period after displaying the first character input UI, change the recommended character input mode to the accent mark character input mode and control the display to display the second character input UI, and
when a character item corresponding to the specific character is selected within the second preset time period after displaying the second character input UI, change the accent mark character input mode to the recommended character input mode and control the display to display the first character input UI.

11. The display apparatus (100) of claim 10, wherein, when the user command is inputted by successively inputting the specific character for more than a preset number of times within a first preset time period, the controller (130) controls the display to display the specific character in an input window and determines the recommended character input mode, or
when the user command is inputted by inputting the specific character for less than or equal to a preset number of times within the first preset time period, the controller controls the display to display the specific character in an input window and determines the accent mark character input mode.

12. The display apparatus (100) of claim 10, wherein, when a recommended character item is selected from the first character input UI displayed in the recommended character input mode, the controller (130) inputs recommended character that corresponds to the selected recommended character item next to the specific character, or when an accent mark character item is selected from the second character input UI displayed in the accent mark character input mode, the controller replaces the specific character with accent mark character that corresponds to the selected accent mark character item and inputting the same.

13. The display apparatus (100) of claim 12, wherein the controller (130) displays a graphic user interface, GUI, on a specific character inputted to an input window in the accent mark character input mode and with the GUI being displayed, replaces the specific character with the selected accent mark character and inputs the same.

14. The display apparatus (100) of claim 10, wherein, when number of recommended characters or accent mark characters that correspond to the specific character in the character input UI displayed in each character input mode is less than a preset number of items that can be displayed on the character input UI, the controller (130) includes at least one accent mark character or recommended character in the first or the second character input UI and displays the same.

## Patentansprüche

1. Verfahren zur Bereitstellung einer Benutzerschnittstelle, UI, umfassend:
Anzeigen (S1010) einer Zeicheneingabe-UI (310);
Empfangen (S1020) eines Benutzerbefehls zum Auswählen eines spezifischen Zeichens (411, 511, 611, 811, 911) auf der Zeicheneingabe-UI (310);
Bestimmen (S1030) eines Eingabemodus zwischen einem empfohlenen Zeichen-Eingabemodus und einem Akzentzeichen-Zeichen-Eingabemodus auf der Basis des Benutzerbefehls, und
Anzeigen (S1040) einer ersten Zeicheneingabe-UI (420) oder einer zweiten Zeicheneingabe-UI (430) gemäß dem wie bestimmten Zeichen-Eingabemodus auf einem Randbereich eines Zeichenelements, das dem spezifischen Zeichen entspricht,
wobei das Bestimmen des Eingabemodus das Bestimmen des Eingabemodus auf der Basis von mindestens einer der folgenden umfasst: einer Anzahl, wie oft das spezifische Zeichen innerhalb eines ersten voreingestellten Zeitraums sukzessiv eingegeben wird, einer Zeit, für die das spezifische Zeichen eingegeben wird, und Charakteristika des spezifischen Zeichens, und
wobei die erste Zeicheneingabe-UI (420) empfohlene Zeichenelemente (421, 422, 423, 424) umfasst, wobei jedes der empfohlenen Zeichenelemente ein vorhergesagtes Zeichen umfasst, das neben dem ausgewählten Zeichen eingegeben werden soll, und die zweite Zeicheneingabe-UI (430) Akzentzeichen-Zeichenelemente (431, 432, 433, 434) umfasst, wobei jedes der Akzentzeichen-Zeichenelemente ein mögliches Akzentzeichen-Zeichen umfasst, um das ausgewählte Zeichen zu ersetzen,
wobei das Verfahren weiterhin Folgendes umfasst:
wenn ein Zeichenelement, das dem spezifischen Zeichen (811) entspricht, innerhalb eines zweiten voreingestellten Zeitraums nach dem Anzeigen der ersten Zeicheneingabe-UI (420) ausgewählt wird, Ändern des empfohlenen Zeichen-Eingabemodus in den Akzentzeichen-Zeichen-Eingabemodus und Anzeigen der zweiten Zeicheneingabe-UI (430), und
wenn ein Zeichenelement, das dem spezifischen Zeichen (811) entspricht, innerhalb des zweiten voreingestellten Zeitraums nach dem Anzeigen der zweiten Zeicheneingabe-UI (430) ausgewählt wird, Ändern des Akzentzeichen-Zeichen-Eingabemodus in den empfohlenen Zeichen-Eingabemodus und Anzeigen der ersten Zeicheneingabe-UI (420).

2. Verfahren nach Anspruch 1, wobei, wenn der Benutzerbefehl durch sukzessives Eingeben des spezifischen Zeichens für mehr als eine voreingestellte Anzahl innerhalb des ersten voreingestellten Zeitraums eingegeben wird, Anzeigen des spezifischen Zeichens in einem Eingabefenster und Bestimmen des empfohlenen Zeichen-Eingabemodus, oder
wenn der Benutzerbefehl durch Eingeben des spezifischen Zeichens für weniger als oder gleich einer voreingestellten Anzahl innerhalb des ersten voreingestellten Zeitraums eingegeben wird, Anzeigen des spezifischen Zeichens in einem Eingabefenster und Bestimmen des Akzentzeichen-Zeichen-Eingabemodus.

3. Verfahren nach Anspruch 1, das weiterhin, wenn ein empfohlenes Zeichenelement aus der ersten Zeicheneingabe-UI, die in dem empfohlenen Zeichen-Eingabemodus angezeigt wird, ausgewählt wird, das Eingeben eines empfohlenen Zeichens, das dem ausgewählten empfohlenen Zeichenelement entspricht, neben dem spezifischen Zeichen, oder wenn ein Akzentzeichen-Zeichenelement aus der zweiten Zeicheneingabe-UI, die in dem Akzentzeichen-Zeichen-Eingabemodus angezeigt wird, ausgewählt wird, das Ersetzen des spezifischen Zeichens durch ein Akzentzeichen-Zeichen, das dem ausgewählten Akzentzeichen-Zeichenelement entspricht, und das Eingeben dieses umfasst.

4. Verfahren nach Anspruch 3, wobei das Eingeben das Anzeigen einer grafischen Benutzerschnittstelle, GUI, auf einem spezifischen Zeichen, das in ein Eingabefenster im Akzentzeichen-Zeichen-Eingabemodus eingegeben wird, und bei angezeigter GUI das Ersetzen des spezifischen Zeichens durch das ausgewählte Akzentzeichen-Zeichen und das Eingeben dieses umfasst.

5. Verfahren nach Anspruch 1, wobei das Anzeigen der Zeicheneingabe-UI, wenn eine Zahl von empfohlenen Zeichen oder Akzentzeichen-Zeichen, die dem spezifischen Zeichen in der Zeicheneingabe-UI entsprechen, die in jedem Zeichen-Eingabemodus angezeigt wird, kleiner als eine voreingestellte Zahl von Elementen ist, die auf der Zeicheneingabe-UI angezeigt werden können, das Einbeziehen mindestens eines Akzentzeichen-Zeichens oder empfohlenen Zeichens in die erste oder die zweite Zeicheneingabe-UI und Anzeigen dieses umfasst.

6. Verfahren nach Anspruch 1, wobei das Anzeigen der Zeicheneingabe-UI, wenn eine Zahl von empfohlenen Zeichen oder Akzentzeichen-Zeichen, die dem spezifischen Zeichen in der Zeicheneingabe-UI entsprechen, die in jedem Zeichen-Eingabemodus angezeigt wird, höher als eine voreingestellte Zahl von Elementen ist, die auf der Zeicheneingabe-UI angezeigt werden können, das Anzeigen einer GUI umfasst, wodurch auf ein Vorhandensein eines zusätzlichen empfohlenen Zeichens oder Akzentzeichen-Zeichens in der ersten oder der zweiten Zeicheneingabe-UI hingewiesen wird.

7. Verfahren nach Anspruch 1, wobei das Bestimmen des Zeichen-Eingabemodus, wenn das spezifische Zeichen eine Verwendung von Akzentzeichen nicht unterstützt, das Bestimmen des Zeichen-Eingabemodus als den empfohlenen Zeichen-Eingabemodus, ungeachtet dessen, von welchem Typ der Benutzerbefehl ist, umfasst.

8. Verfahren nach Anspruch 1, wobei die erste und die zweite Zeicheneingabe-UI auf eine Weise eines partiellen Überschneidens mit Zeichenelementen, die benachbart zu dem spezifischen Zeichenelement angeordnet sind, angezeigt werden, um einem Benutzer zu ermöglichen, das Zeichenelement auszuwählen, das benachbart zu dem spezifischen Zeichenelement angeordnet ist.

9. Verfahren nach Anspruch 1, wobei das Anzeigen der Zeicheneingabe-UI das Suchen nach einem empfohlenen Zeichen für das spezifische Zeichen auf der Basis von mindestens einem Zeichen, das die höchste Möglichkeit aufweist, neben einem Zeichen eingegeben zu werden, das in das spezifische Zeichenelement eingebunden ist, unter Verwendung einer Wörterbuchdatenbank und einer Benutzerdatenbank, die darin einen Datensatz von Wörtern, die von einem Benutzer verwendet werden, gespeichert aufweisen, und das Anzeigen des gesuchten Zeichens umfasst.

10. Anzeigevorrichtung (100), umfassend:
eine Anzeige (110), die dazu konfiguriert ist, eine Zeicheneingabe-Benutzerschnittstelle, Zeicheneingabe-UI, anzuzeigen;
eine Benutzerschnittstelleneinheit, UI-Einheit (120), die dazu konfiguriert ist, einen Benutzerbefehl zum Auswählen eines spezifischen Zeichens auf der Zeicheneingabe-UI zu empfangen; und
eine Steuerung (130), die dazu konfiguriert ist, einen Eingabemodus zwischen einem empfohlenen Zeichen-Eingabemodus und einem Akzentzeichen-Zeichen-Eingabemodus auf der Basis des Benutzerbefehls zu bestimmen und die Anzeige dahingehend zu steuern, eine erste Zeicheneingabe-UI oder eine zweite Zeicheneingabe-UI gemäß dem wie bestimmten Zeichen-Eingabemodus auf einem Randbereich eines Zeichenelements, das dem spezifischen Zeichen entspricht, anzuzeigen,
wobei die Steuerung dazu konfiguriert ist, den Eingabemodus auf der Basis von mindestens einer der folgenden zu bestimmen: einer Anzahl, wie oft das spezifische Zeichen innerhalb eines ersten voreingestellten Zeitraums sukzessiv eingegeben wird, einer Zeit, für die das spezifische Zeichen eingegeben wird, und Charakteristika des spezifischen Zeichens, und
wobei die erste Zeicheneingabe-UI empfohlene Zeichenelemente umfasst, wobei jedes der empfohlenen Zeichenelemente ein vorhergesagtes Zeichen umfasst, das neben dem ausgewählten Zeichen eingegeben werden soll, und die zweite Zeicheneingabe-UI Akzentzeichen-Zeichenelemente umfasst, wobei jedes der Akzentzeichen-Zeichenelemente ein mögliches Akzentzeichen-Zeichen umfasst, um das ausgewählte Zeichen zu ersetzen,
wobei die Steuerung weiterhin zu Folgendem konfiguriert ist:
wenn ein Zeichenelement, das dem spezifischen Zeichen entspricht, innerhalb eines zweiten voreingestellten Zeitraums nach dem Anzeigen der ersten Zeicheneingabe-UI ausgewählt wird, Ändern des empfohlenen Zeichen-Eingabemodus in den Akzentzeichen-Zeichen-Eingabemodus und Steuern der Anzeige dahingehend, die zweite Zeicheneingabe-UI anzuzeigen, und
wenn ein Zeichenelement, das dem spezifischen Zeichen entspricht, innerhalb des zweiten voreingestellten Zeitraums nach dem Anzeigen der zweiten Zeicheneingabe-UI ausgewählt wird, Ändern des Akzentzeichen-Zeichen-Eingabemodus in den empfohlenen Zeichen-Eingabemodus und Steuern der Anzeige dahingehend, die erste Zeicheneingabe-UI anzuzeigen.

11. Anzeigevorrichtung (100) nach Anspruch 10, wobei, wenn der Benutzerbefehl durch sukzessives Eingeben des spezifischen Zeichens für mehr als eine voreingestellte Anzahl innerhalb des ersten voreingestellten Zeitraums eingegeben wird, die Steuerung (130) die Anzeige dahingehend steuert, das spezifische Zeichen in einem Eingabefenster anzuzeigen, und den empfohlenen Zeichen-Eingabemodus bestimmt, oder
wenn der der Benutzerbefehl durch Eingeben des spezifischen Zeichens für weniger als oder gleich einer voreingestellten Anzahl innerhalb des ersten voreingestellten Zeitraums eingegeben wird, die Steuerung die Anzeige dahingehend steuert, das spezifische Zeichen in einem Eingabefenster anzuzeigen, und den Akzentzeichen-Zeichen-Eingabemodus bestimmt.

12. Anzeigevorrichtung (100) nach Anspruch 10, wobei, wenn ein empfohlenes Zeichenelement aus der ersten Zeicheneingabe-UI, die in dem empfohlenen Zeichen-Eingabemodus angezeigt wird, ausgewählt wird, die Steuerung (130) ein empfohlenes Zeichen, das dem ausgewählten empfohlenen Zeichenelement entspricht, neben dem spezifischen Zeichen eingibt, oder wenn ein Akzentzeichen-Zeichenelement aus der zweiten Zeicheneingabe-UI, die in dem Akzentzeichen-Zeichen-Eingabemodus angezeigt wird, ausgewählt wird, die Steuerung das spezifische Zeichen durch ein Akzentzeichen-Zeichen, das dem ausgewählten Akzentzeichen-Zeichenelement entspricht, ersetzt und dieses eingibt.

13. Anzeigevorrichtung (100) nach Anspruch 12, wobei die Steuerung (130) eine grafische Benutzerschnittstelle, GUI, auf einem spezifischen Zeichen, das in ein Eingabefenster im Akzentzeichen-Zeichen-Eingabemodus eingegeben wird, anzeigt und bei angezeigter GUI das spezifische Zeichen durch das ausgewählte Akzentzeichen-Zeichen ersetzt und dieses eingibt.

14. Anzeigevorrichtung (100) nach Anspruch 10, wobei, wenn eine Zahl von empfohlenen Zeichen oder Akzentzeichen-Zeichen, die dem spezifischen Zeichen in der Zeicheneingabe-UI entsprechen, die in jedem Zeichen-Eingabemodus angezeigt wird, kleiner als eine voreingestellte Zahl von Elementen ist, die auf der Zeicheneingabe-UI angezeigt werden können, die Steuerung (130) mindestens ein Akzentzeichen-Zeichen oder empfohlenes Zeichen in die erste oder die zweite Zeicheneingabe-UI einbezieht und dieses anzeigt.

## Revendications

1. Procédé de mise en oeuvre d'une interface utilisateur, IU, comportant les étapes consistant à :
afficher (S1010) une IU d'entrée de caractère (310) ;
recevoir (S1020) une instruction d'utilisateur servant à sélectionner un caractère spécifique (411, 511, 611, 811, 911) sur l'IU d'entrée de caractère (310) ;
déterminer (S1030) un mode d'entrée entre un mode d'entrée de caractère recommandé et un mode d'entrée de caractère de symbole d'accent, en fonction de l'instruction d'utilisateur ; et
afficher (S1040) sur une zone de contour d'un élément de caractère qui correspond au caractère spécifique, une première IU d'entrée de caractère (420) ou une deuxième IU d'entrée de caractère (430) en fonction du mode d'entrée de caractère tel qu'il a été déterminé,
dans lequel l'étape consistant à déterminer le mode d'entrée comporte l'étape consistant à déterminer le mode d'entrée en fonction d'au moins l'un parmi : un nombre de fois que le caractère spécifique est entré de manière successive dans les limites d'une première période de temps prédéfinie, une durée pendant laquelle le caractère spécifique est entré, et des caractéristiques du caractère spécifique, et
dans lequel la première IU d'entrée de caractère (420) comporte des éléments de caractère recommandé (421, 422, 423, 424), chacun des éléments de caractère recommandé comportant un caractère prédit comme allant être entré à côté du caractère sélectionné, et la deuxième IU d'entrée de caractère (430) comporte des éléments de caractère de symbole d'accent (431, 432, 433, 434), chacun des éléments de caractère de symbole d'accent comportant un caractère de symbole d'accent possible à des fins de remplacement du caractère sélectionné,
dans lequel le procédé comporte par ailleurs les étapes consistant à :
quand un élément de caractère correspondant au caractère spécifique (811) est sélectionné dans les limites d'une deuxième période de temps prédéfinie après l'affichage de la première IU d'entrée de caractère (420), changer le mode d'entrée de caractère recommandé en mode d'entrée de caractère de symbole d'accent et afficher la deuxième IU d'entrée de caractère (430),
quand un élément de caractère correspondant au caractère spécifique (811) est sélectionné dans les limites d'une deuxième période de temps prédéfinie après l'affichage de la deuxième IU d'entrée de caractère (430), changer le mode d'entrée de caractère de symbole d'accent en mode d'entrée de caractère recommandé et afficher la première IU d'entrée de caractère (420).

2. Procédé selon la revendication 1, comportant par ailleurs, quand l'instruction d'utilisateur est entrée par l'entrée successive du caractère spécifique pendant plus d'un nombre de fois prédéfini dans les limites de la première période de temps prédéfinie, les étapes consistant à afficher le caractère spécifique dans une fenêtre d'entrée et à déterminer le mode d'entrée de caractère recommandé, ou
quand l'instruction d'utilisateur est entrée par l'entrée du caractère spécifique pendant moins du ou pendant le nombre de fois prédéfini dans les limites de la première période de temps prédéfinie, les étapes consistant à afficher le caractère spécifique dans une fenêtre d'entrée et à déterminer le mode d'entrée de caractère de symbole d'accent.

3. Procédé selon la revendication 1, comportant par ailleurs, quand un élément de caractère recommandé est sélectionné à partir de la première IU d'entrée de caractère affichée dans le mode d'entrée de caractère recommandé, l'étape consistant à entrer le caractère recommandé qui correspond à l'élément de caractère recommandé sélectionné à côté du caractère spécifique, ou quand un élément de caractère de symbole d'accent est sélectionné à partir de la deuxième IU d'entrée de caractère affichée dans le mode d'entrée de caractère de symbole d'accent, les étapes consistant à remplacer le caractère spécifique par un caractère de symbole d'accent qui correspond à l'élément de caractère de symbole d'accent sélectionné et à entrer celui-ci.

4. Procédé selon la revendication 3, dans lequel l'étape consistant à entrer comporte les étapes consistant à afficher une interface utilisateur graphique, IUG, sur un caractère spécifique entré sur une fenêtre d'entrée dans le mode d'entrée de caractère de symbole d'accent et au moyen de l'IUG affichée, à remplacer le caractère spécifique par le caractère de symbole d'accent sélectionné et à entrer celui-ci.

5. Procédé selon la revendication 1, dans lequel l'étape consistant à afficher l'IU d'entrée de caractère comporte, quand un nombre de caractères recommandés ou de caractères de symbole d'accent qui correspondent au caractère spécifique dans l'IU d'entrée de caractère affichée dans chaque mode d'entrée de caractère est inférieur à un nombre prédéfini d'éléments qui peuvent être affichés sur l'IU d'entrée de caractère, les étapes consistant à inclure au moins un caractère de symbole d'accent ou un caractère recommandé dans la première ou la deuxième IU d'entrée de caractère et à afficher celui-ci.

6. Procédé selon la revendication 1, dans lequel l'étape consistant à afficher l'IU d'entrée de caractère comporte, quand un nombre de caractères recommandés ou de caractères de symbole d'accent qui correspondent au caractère spécifique dans l'IU d'entrée de caractère affichée dans chaque mode d'entrée de caractère est supérieur à un nombre prédéfini d'éléments qui peuvent être affichés sur l'IU d'entrée de caractère, l'étape consistant à afficher une IUG, pour indiquer ainsi une présence d'un caractère recommandé supplémentaire ou d'un caractère de symbole d'accent supplémentaire dans la première ou la deuxième IU d'entrée de caractère.

7. Procédé selon la revendication 1, dans lequel l'étape consistant à déterminer le mode d'entrée de caractère comporte, quand le caractère spécifique n'accepte pas l'utilisation de symboles d'accent, l'étape consistant à déterminer le mode d'entrée de caractère comme étant le mode d'entrée de caractère recommandé, quel que soit le type d'instruction d'utilisateur.

8. Procédé selon la revendication 1, dans lequel les première et deuxième IU d'entrée de caractère sont affichées selon une façon consistant à chevaucher partiellement des éléments de caractère qui sont agencés de manière adjacente par rapport à l'élément de caractère spécifique, pour permettre à un utilisateur de sélectionner l'élément de caractère agencé de manière adjacente par rapport à l'élément de caractère spécifique.

9. Procédé selon la revendication 1, dans lequel l'étape consistant à afficher l'IU d'entrée de caractère comporte l'étape consistant à rechercher un caractère recommandé pour le caractère spécifique en se basant sur au moins un caractère qui a la plus grande possibilité d'être entré à côté d'un caractère inclus dans l'élément de caractère spécifique, en utilisant une base de données de dictionnaire et une base de données d'utilisateur stockant dans celle-ci un enregistrement de mots utilisés par un utilisateur, et l'étape consistant à afficher le caractère recherché.

10. Appareil d'affichage (100) comportant :
un affichage (110) configuré pour afficher une interface utilisateur, IU, d'entrée de caractère ;
une unité d'interface utilisateur, IU, (120) configurée pour recevoir une instruction d'utilisateur servant à sélectionner un caractère spécifique sur l'IU d'entrée de caractère ; et
un dispositif de commande (130) configuré pour déterminer un mode d'entrée entre un mode d'entrée de caractère recommandé et un mode d'entrée de caractère de symbole d'accent, en fonction de l'instruction d'utilisateur, et pour commander l'affichage pour afficher, sur une zone de contour d'un élément de caractère qui correspond au caractère spécifique, une première IU d'entrée de caractère ou une deuxième IU d'entrée de caractère en fonction du mode d'entrée de caractère tel qu'il a été déterminé,
dans lequel le dispositif de commande est configuré pour déterminer le mode d'entrée en fonction d'au moins l'un parmi : un nombre de fois que le caractère spécifique est entré de manière successive dans les limites d'une première période de temps prédéfinie, une durée pendant laquelle le caractère spécifique est entré, et des caractéristiques du caractère spécifique, et
dans lequel la première IU d'entrée de caractère comporte des éléments de caractère recommandé, chacun des éléments de caractère recommandé comportant un caractère prédit comme allant être entré à côté du caractère sélectionné, et la deuxième IU d'entrée de caractère comporte des éléments de caractère de symbole d'accent, chacun des éléments de caractère de symbole d'accent comportant un caractère de symbole d'accent possible à des fins de remplacement du caractère sélectionné,
dans lequel le dispositif de commande est par ailleurs configuré pour :
quand un élément de caractère correspondant au caractère spécifique est sélectionné dans les limites d'une deuxième période de temps prédéfinie après l'affichage de la première IU d'entrée de caractère, changer le mode d'entrée de caractère recommandé en mode d'entrée de caractère de symbole d'accent et commander l'affichage pour afficher la deuxième IU d'entrée de caractère, et
quand un élément de caractère correspondant au caractère spécifique est sélectionné dans les limites d'une deuxième période de temps prédéfinie après l'affichage de la deuxième IU d'entrée de caractère, changer le mode d'entrée de caractère de symbole d'accent en mode d'entrée de caractère recommandé et commander l'affichage pour afficher la première IU d'entrée de caractère.

11. Appareil d'affichage (100) selon la revendication 10, dans lequel, quand l'instruction d'utilisateur est entrée par l'entrée successive du caractère spécifique pendant plus d'un nombre de fois prédéfini dans les limites d'une première période de temps prédéfinie, le dispositif de commande (130) commande l'affichage pour afficher le caractère spécifique dans une fenêtre d'entrée et détermine le mode d'entrée de caractère recommandé, ou
quand l'instruction d'utilisateur est entrée par l'entrée du caractère spécifique pendant moins du ou pendant le nombre de fois prédéfini dans les limites de la première période de temps prédéfinie, le dispositif de commande commande l'affichage pour afficher le caractère spécifique dans une fenêtre d'entrée et détermine le mode d'entrée de caractère de symbole d'accent.

12. Appareil d'affichage (100) selon la revendication 10, dans lequel, quand un élément de caractère recommandé est sélectionné à partir de la première IU d'entrée de caractère affichée dans le mode d'entrée de caractère recommandé, le dispositif de commande (130) entre le caractère recommandé qui correspond à l'élément de caractère recommandé sélectionné à côté du caractère spécifique, ou quand un élément de caractère de symbole d'accent est sélectionné à partir de la deuxième IU d'entrée de caractère affichée dans le mode d'entrée de caractère de symbole d'accent, le dispositif de commande remplace le caractère spécifique par un caractère de symbole d'accent qui correspond à l'élément de caractère de symbole d'accent sélectionné et entre celui-ci.

13. Appareil d'affichage (100) selon la revendication 12, dans lequel le dispositif de commande (130) affiche une interface utilisateur graphique, IUG, sur un caractère spécifique entré sur une fenêtre d'entrée dans le mode d'entrée de caractère de symbole d'accent et au moyen de l'IUG affichée, remplace le caractère spécifique par le caractère de symbole d'accent sélectionné et entre celui-ci.

14. Appareil d'affichage (100) selon la revendication 10, dans lequel, quand un nombre de caractères recommandés ou de caractères de symbole d'accent qui correspondent au caractère spécifique dans l'IU d'entrée de caractère affichée dans chaque mode d'entrée de caractère est inférieur à un nombre prédéfini d'éléments qui peuvent être affichés sur l'IU d'entrée de caractère, le dispositif de commande (130) inclut au moins un caractère de symbole d'accent ou un caractère recommandé dans la première ou la deuxième IU d'entrée de caractère et affiche celui-ci.
